# EUROPÄISCHE PATENTSCHRIFT

(11) **EP 1 177 367 B1**
(45) Veröffentlichungstag und Bekanntmachung des Hinweises auf die Patenterteilung: **20.08.2003**
(21) Anmeldenummer: 00938634.3
(22) Anmeldetag: 11.05.2000
(51) Int. Cl.: F01D 11/00, F16J 15/08

(54) **DICHTUNG ZUR ABDICHTUNG EINES SPALTES, INSBESONDERE IN EINER TURBINE, UND TURBINE**
SEAL FOR SEALING A GAP, IN PARTICULAR IN A TURBINE, AND A TURBINE
GARNITURE POUR L'ETANCHEIFICATION D'UNE FENTE, EN PARTICULIER D'UNE TURBINE, ET TURBINE

(30) Priorität: 12.05.1999 EP 99109530
(43) Veröffentlichungstag der Anmeldung: 06.02.2002
(73) Patentinhaber: SIEMENS AKTIENGESELLSCHAFT, 80333 München (DE)
(72) Erfinder: TIEMANN, Peter, D-58452 Witten (DE)
(86) Internationale Anmeldenummer: EP0004284
(87) Internationale Veröffentlichungsnummer: WO00070192

(56) Entgegenhaltungen:
- FR-A- 610 973
- US-A- 3 361 430
- US-A- 3 642 295
- US-A- 3 975 114
- US-A- 4 537 024
- US-A- 4 658 847

## Beschreibung

Dichtung zur Abdichtung eines Spaltes, insbesondere in einer Turbine, und Turbine

Die Erfindung betrifft eine Dichtung zur Abdichtung eines Spaltes insbesondere in einem Heißgaskanal einer Turbine. Die Erfindung betrifft auch eine Turbine, insbesondere eine Gasturbine, mit einer solchen Dichtung.

Die US PS 5,221,096 zeigt eine mehrstückige Dichtung zur Reduzierung einer Kühlluftleckage durch einen Spalt zwischen zwei Stufen eines Gasturbinentriebwerkes. Ein erster Teil der Dichtung ist so dünn, daß er unter einem Druckgradienten so verformt wird, daß eine Abdichtung des Spaltes erfolgt. Ein zweiter Teil der Dichtung ist mit dem ersten Teil verbunden und so dick ausgeführt, daß er der Dichtung eine Steifigkeit verleiht. Durch diese Steifigkeit wird die Montage der Dichtung erleichtert.

Die EP 0 139 072 A1 zeigt eine temperaturresistente, E-förmige Federdichtung. Diese Dichtung ist bei sehr hohen und ungleichmäßig verteilten Temperaturen vorteilhaft einsetzbar.

Einen Dichtring zeigt die US PS 5,058,906. Der metallische Dichtring ist so ausgebildet, daß er elastisch verformbar ist. Dadurch ergibt sich insbesondere eine Eignung für die Abdichtung einer Leitung, bei der große Temperaturvariationen auftreten.

Die US PS 4,537,024 zeigt die Abdichtung eines Spaltes in einer Gasturbine mittels eines im Querschnitt schleifenförmigen, flexiblen Dichtrings, der in gegenüberliegenden Nuten zweier Bauteile eingefügt ist, zwischen denen ein abzudichtender Spalt besteht.

Die FR 610 973 zeigt eine Dichtung mit einer temperaturabhängigen Ausdehnungsfähigkeit, durch welche Ausdehnungsfähigkeit oberhalb einer Arbeitstemperatur ein Spalt abdichtbar ist, wobei die Dichtung als Bimetallstreifen ausgebildet ist.

Die US-PS 3,975 114 zeigt eine Dichtungsanordnung zur Abdichtung eines Spaltes in einer Turbine. Ein in einer Nut angeordneter Dichtstreifen dichtet den Spalt bei hohen Temperaturen durch eine bimetallische Verformung zweier Streifenhälften ab. Die Streifenhälften verbiegen sich entgegengesetzt zueinander und pressen sich mit einer Kante einer konkav gekrümmten Oberfläche jeweils an eine Nutwand an.

In der US-PS 4,650,397 ist eine Dichtung für die Abdichtung eines Spaltes in einer Turbine offenbart. Die Dichtung ist durch einen winkligen Metallstreifen gebildet, der in seiner Längsrichtung segmentiert ist. Eine Fläche des gewinkelten Metallstreifens wird auf einer Seite des abzudichtenden Spaltes fest angeschraubt. Die zweite Fläche preßt sich durch eine elastische Federwirkung an eine andere Seite des abzudichtenden Spaltes an. Die Anpreßwirkung kann auch durch eine bimetallische Ausdehnungsfähigkeit des Metallstreifens bewirkt werden.

Die Erfindung geht von der Erkenntnis aus, daß Dichtungen der genannten Art entweder keine genügende Anpreßwirkung bei hohen Temperaturene oder aber keine genügende Längsdehnungsfähigkeit aufgrund schlechter Elastizität quer zu einer Bimetallstreifen-Anordnung aufweisen. Die genannten bimetallischen Dichtungen, die eine gute Dichtwirkung bei hohen Temperaturen prinzipiell erreichen, müssen somit segmenartig oder gestückelt in einen ausgedehnten Spalt eingebaut werden. Dies verkompliziert den Ein- und Ausbau und verschlechtert die Dichtwirkung durch im Bereich der Segmentspalte entstehende unabgedichtete Spaltteile.

Entsprechend ist Aufgabe der Erfindung die Angabe einer Dichtung, die auch in einen ausgedehnten, gekrümmten Spalt einfach eingebaut werden kann und diesen auch bei veränderlichen Temperaturbedingungen und insbesondere bei hohen Temperaturen in betriebssicherer Weise abdichtet. Weitere Aufgabe der Erfindung ist die Angabe einer Turbine mit einer entsprechenden Dichtung.

Erfindungsgemäß wird die auf eine Dichtung gerichtete Aufgabe gelöst durch eine Dichtung mit einer temperaturabhängigen Ausdehnungsfähigkeit, durch welche Ausdehnungsfähigkeit oberhalb einer Arbeitstemperatur ein Spalt abdichtbar ist, ausgebildet als bimetallischer Körper, wobei sie eine konvex gekrümmte Oberfläche aufweist, die durch die Ausdehnungsfähigkeit so gegen eine Abschlußseite anpreßbar ist, dass der Spalt abgedichtet wird.

Durch eine solche Dichtung ist es möglich, einen Spalt oberhalb einer Arbeitstemperatur in einfacher Weise und betriebssicher abzudichten. Die Arbeitstemperatur ist dabei eine untere Grenze für typische Betriebstemperaturen jener Vorrichtungen oder Maschinen, in denen die Dichtung zum Einsatz kommt wobei die Temperatur im Bereich der Dichtung relevant ist. Mit der Erfindung wird eine aktive Abdichtung des Spaltes erreicht, da die Dichtung mit steigender Temperatur aktiv ihre Dichtwirkung erhöht. Durch die temperaturabhängige Ausdehnungsfähigkeit der Dichtung verbessert sich die Dichtwirkung mit steigender Temperatur. Häufig kommt es gerade mit steigender Temperatur zu erhöhten Dichtproblemen, da sich Bauteile thermisch bedingt ausdehnen und sich dabei unter Umständen gegeneinander verschieben. Spalte zwischen solchen Bauteilen können sich dadurch vergrößern oder auch in ihrer Form verändern. Konventionelle Dichtungen vermögen dabei den erhöhten Dichtanforderungen bei hohen Temperaturen nicht in angemessener Weise zu folgen. Durch die Ausnutzung einer temperaturabhängigen Ausdehnungsfähigkeit wird eine Dichtung bereitgestellt, die gezielt gerade mit steigender Temperatur eine sehr gute Dichtwirkung aufweist. Gegenüber herkömmlichen bimetallischen Dichtungen ist dabei eine Abdichtung mittels einer konvex gekrümmten Oberfläche vorgesehen. Hierdurch ergibt sich eine flexible, insbesondere auch quer zur Längsrichtung elastische Dichtung, durch die auch sehr ausgedehnte und gekrümmte Spalte abdichtbar sind. Zudem wird durch die konvex gekrümmte Oberfläche eine vergrößerte Anpreßfläche und damit eine verbesserte Dichtwirkung erreicht.

Vorzugsweise ist die Dichtung als Bimetallstreifen ausgebildet. Ein Bimetallstreifen ist ein aus Metallen mit verschiedenen Wärmeausdehnungskoeffizienten gebildetes, streifenförmiges Blech. Die Metalle sind vorzugsweise aufeinandergelötet. Durch diese Ausbildung läßt sich gezielt eine angepaßte Wärmeausdehnungsfähigkeit für die Dichtung erreichen. Dies wird durch eine Wahl geeigneter Metalle oder auch durch die Wahl der Form und Anordnung dieser Metalle erreicht. Natürlich können auch mehr als zwei Werkstoffe für die Dichtung verwendet werden.

Bevorzugt ist die Dichtung zur Abdichtung eines Spaltes zwischen Bauteilen eines Heißgaskanales einer Turbine ausgelegt. Zum Beispiel weisen Gasturbinen oder Dampfturbinen Heißgaskanäle auf. Bei einer Gasturbine umfaßt ein solcher Heißgaskanal eine Brennkammer und ein nachgeschaltetes Turbinenteil. Bei einer Dampfturbine ist der Heißgaskanal der von heißem Dampf durchströmte Strömungskanal. Ein solcher Heißgaskanal ist aus Bauteilen aufgebaut, zwischen denen Spalte verbleiben können. Durch solche Spalte kann das im Heißgaskanal geführte heiße Gas austreten. Dies hat sowohl eine Wirkungsgradeinbuße für die Turbine als auch unter Umständen Beschädigungen für hinter dem Spalt liegende Bereiche zur Folge. Weiterhin ist es oftmals notwendig, die Bauteile auf ihrem dem Heißgaskanal abgewandten Seite mit einem Kühlfluid zu kühlen. Um wiederum Wirkungsgradeinbußen zu verhindern, muß dabei ein Eintritt des Kühlfluides in den Heißgaskanal über den Spalt möglichst gering gehalten werden. Der Spalt zwischen den Bauteilen muß daher möglichst effektiv abgedichtet werden. Die Dichtwirkung soll gerade dann besonders hoch sein, wenn der Heißgaskanal von dem heißen Gas durchströmt wird und somit die Bauteile auf einer vergleichsweise hohen Temperatur sind, da in diesem Fall der Kühlfluidbedarf besonders hoch ist. Die zur Abdichtung des Spaltes verwendete Dichtung muß diesen hohen Temperaturen widerstehen können. Weiterhin soll sie gerade bei den hohen Temperaturen eine besonders effiziente Dichtwirkung entfalten. Dies wird durch die temperaturabhängige Ausdehnungsfähigkeit erreicht. In einem Kaltzustand, also zum Beispiel wenn die Turbine nicht in Betrieb ist, entwickelt die Dichtung eine vergleichsweise geringe Dichtwirkung und übt nur eine vergleichsweise geringe Anpreßkraft im Spalt aus. Dadurch ist sie in einfacher Weise montierbar oder auswechselbar. Beispielsweise kann sie einfach in eine Nut im Spalt eingeschoben werden. Mit zunehmender Erwärmung der Dichtung dehnt diese sich aus und preßt sich dadurch an die den Spalt begrenzenden Flächen an. Somit wird bei zunehmender Temperatur eine erhöhte Dichtwirkung erreicht.

Bevorzugt ist die Dichtung zur Abdichtung eines Spaltes zwischen unmittelbar benachbarten Schaufeln eines Schaufelkranzes der Turbine ausgelegt. Der Schaufelkranz kann ein Leitschaufelkranz oder ein Laufschaufelkranz sein. Ein Spalt zwischen zwei unmittelbar benachbarten Schaufeln eines Schaufelkranzes wird in der Regel zwischen den aneinandergrenzenden Plattformen der Schaufeln gebildet. Diese Plattformen dienen zur Begrenzung des Heißgaskanales. Bei einer hohen thermischen Belastung dieser Plattformen kann es notwendig werden, diese auf der der Heißgasseite abgewandten Seite mittels eines Kühlfluides, z. B. Kühlluft, zu kühlen. Bei einer Gasturbine wird diese Kühlluft in der Regel von der Verdichterluft abgezweigt. Bei einem steigenden Kühlluftbedarf sinkt der Wirkungsgrad der Gasturbine, da weniger Verdichterluft für die Verbrennung zur Verfügung steht. Außerdem steigt bei einem geringeren Luftgehalt der Verbrennung die Produktion von Stickoxiden. Eine Leckage für Kühlluft durch den Spalt muß somit möglichst gering gehalten werden. Durch die wärmedehnungsbasierte Dichtung wird dies insbesondere für hohe Temperaturen erreicht.

Bevorzugt ist die Dichtung zur Abdichtung eines Spaltes zwischen benachbarten Schaufelkränzen der Turbine ausgelegt. Bevorzugtermaßen ist die Dichtung zur Abdichtung eines Spaltes zwischen einem Leitschaufelkranz und einem Führungsring für einen Laufschaufelkranz ausgelegt. In diesen Fällen ist die Dichtung eine axiale Dichtung, da ein Spalt in axialer Richtung überbrückt wird. Dieser Spalt ist erheblich ausgedehnt und kreisförmig gekrümmt. Einen solchen Spalt bimetallisch abzudichten war bisher nicht möglich. Die Montage einer solchen axialen Dichtung ist für ein passgenaues Einschieben der Dichtung in eine vorgesehene Nut auf Grund der erheblichen Längen schwierig. Durch die Dichtung mit temperaturabhängiger Ausdehnungsfähigkeit wird diese Montage erheblich erleichtert, da die Dichtung im kalten Zustand ohne weiteres in die Nut eingeschoben werden kann. Erst bei Betrieb der Turbine kommt es zu einer Erwärmung der Dichtung und damit zu deren Ausdehnung, wodurch der Spalt abgedichtet wird.

Vorzugsweise weist die Dichtung einen Metallstreifen aus einem ersten Metall mit einem ersten Wärmeausdehnungskoeffizienten und mit einer Oberseite auf, auf welche Oberseite voneinander beabstandet Metallstücke aus einem zweiten Metall mit einem vom ersten Metall verschiedenen zweiten Wärmeausdehnungskoeffizienten aufgebracht sind. Eine solche Dichtung ist insbesondere als axiale Dichtung geeignet. Sie kann als ein sequentielles Bimetall bezeichnet werden, da diese Dichtung in den Bereichen der aufgebrachten Metallstücke jeweils ein Bimetall darstellt. Bei einer Erwärmung der Dichtung in dem Spalt verbiegt sich die Dichtung wellenartig. Im Bereich der Wellenberge und -täler preßt sich die Dichtung an die den Spalt begrenzenden Oberflächen. Insbesondere ist die Dichtung in eine Nut eingelegt, deren Form mit der Form der Dichtung so harmonisiert, daß sich die Dichtung bei einer Ausdehnung. an die Nut anschmiegt. Vorzugsweise ist dafür der Metallstreifen an seiner der Oberseite gegenüberliegenden Seite gerundet. Gleichzeitig ist auch die Nutform gerundet ausgeführt. Dadurch ergibt sich eine hohe Dichtwirkung, da sich die Dichtung bei der wellenförmigen Ausdehnung nahezu lückenlos an die Nutoberfläche anschmiegt. Die Dichtung ist insbesondere geeignet, den Verformungen in Axialspalten zwischen benachbarten Schaufelkränzen oder zwischen einem Führungsring und einem Schaufelkranz zu folgen. Die Abdichtung solcher aufeinander folgender Stufen in einer Turbine ist durch die in der Regel konisch verlaufende Strömungskanalform schwierig, da jede axiale Dehnung durch die Konusform mit einer radialen Dehnung gekoppelt ist. Die große Verformungstoleranz der Dichtung gewährt hier auch bei hohen Temperaturen eine gute Dichtwirkung.

Bevorzugt ist die Dichtung entlang einer Längserstreckungsrichtung gerichtet und weist eine im Querschnitt etwa C-förmige, W-förmige oder S-förmige Form auf. Die C-Form kann auch als ein stückweise entlang seiner Längsrichtung offenes Rohr aufgefaßt werden. Mit der W- oder S-Form ist auch eine allgemein schlangenlinienförmige Form gemeint.

Erfindungsgemäß wird die auf eine Turbine gerichtete Aufgabe gelöst durch eine Turbine mit einem aus einer Mehrzahl von Bauteilen gebildeten Heißgaskanal und einem Spalt zwischen zwei dieser Bauteilen, wobei der Spalt durch eine temperaturabhängige Ausdehnungsfähigkeit eines Dichtelementes oberhalb einer Arbeitstemperatur abdichtbar ist.

Die Arbeitstemperatur ist die Temperatur, die eine untere Grenze für die Betriebstemperatur der Turbine im Bereich der Dichtung darstellt. Die Vorteile für diese Turbine ergeben sich entsprechend den obigen Ausführungen zu den Vorteilen der Dichtung.

Vorzugsweise verläuft in den zwei Bauteilen - angrenzend an den Spalt und parallel zu dem Spalt - jeweils eine Nut, in der die Dichtung angeordnet ist, wobei die Dichtung einen ersten Metallstreifen aus einem ersten Metall mit einem ersten Wärmeausdehnungskoeffizienten und mit einer Oberseite aufweist, auf welche Oberseite voneinander beabstandet Metallstücke aus einem zweiten Metall mit einem vom ersten Metall verschiedenen zweiten Wärmeausdehnungskoeffizienten aufgebracht sind. Weiter bevorzugt weist die Nut eine Nutoberfläche mit einer Form so auf, daß sich die Dichtung bei einer Ausdehnung an die Nutoberfläche anschmiegt.

Die Turbine ist vorzugsweise eine Gasturbine, weiter bevorzugt eine stationäre Gasturbine mit einer Leistung größer als 10 Megawatt.

Bevorzugtermaßen sind die zwei Bauteile Elemente einer Brennkammerauskleidung. Eine Brennkammer weist in der Regel eine aus einzelnen Elementen aufgebaute Brennkammerauskleidung auf. Diese Elemente sind hochtemperaturbeständig. In der Regel werden diese Elemente rückseitig durch ein Kühlfluid, insbesondere Kühlluft, gekühlt. Zwischen benachbarten Elementen verbleibt ein Spalt, der entsprechend den obigen Ausführungen sowohl gegen einen Eintritt von Heißgas als auch gegen eine Leckage von Kühlluft abgedichtet werden muß, wofür die Dichtung in besonderem Maße geeignet ist.

Die Erfindung wird in einem Ausführungsbeispiel anhand der Zeichnungen näher erläutert. Es zeigen teilweise schematisch und nicht maßstäblich:
- FIG. 1: eine Gasturbine in einem Längsschnitt,
- FIG. 2: einen Ausschnitt eines Leitschaufelkranzes in einem Längsschnitt,
- FIG. 3: einen Ausschnitt eines Laufschaufelkranzes und eines strömungstechnisch benachbart nachgeordneten Leitschaufelkranzes in einem Längsschnitt,
- FIG. 4: in einem Längsschnitt einen Ausschnitt einer Brennkammerauskleidung,

- FIG. 5: bis FIG. 7 unterschiedliche Ausbildungen von Dichtungen,
- FIG. 8: eine Dichtung für einen Spalt zwischen zwei Leitschaufeln in einem kalten Zustand,
- FIG. 9: die Dichtung der FIG. 8 in erwärmten Zustand,
- FIG. 10: eine axiale Dichtung im kalten Zustand,
- FIG. 11: die Dichtung der FIG. 10 im erwärmten Zustand,
- FIG. 12: die Dichtgung der FIG. 10 im Längsschnitt im eingebauten Zustand.

Gleiche Bezugszeichen haben in den verschiedenen Figuren die gleiche Bedeutung.

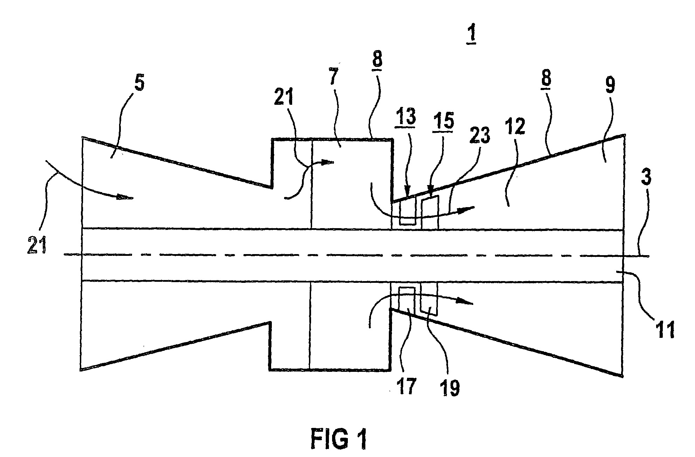

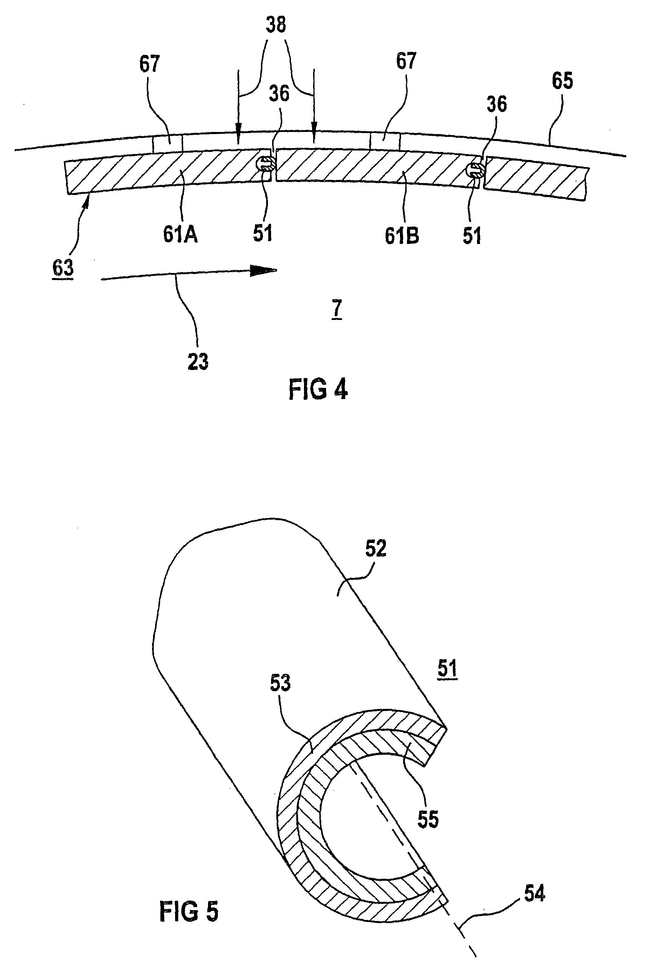

Fig. 1 zeigt eine Gasturbine 1. Entlang einer Turbinenachse 3 sind hintereinander angeordnet ein Verdichter 5, eine Brennkammer 7 und ein Turbinenteil 9. Der Verdichter 5 und das Turbinenteil 9 sind auf einer gemeinsamen Welle 11 angeordnet. Im Turbinenteil 9 ist ein Strömungskanal 12 vorgesehen. Im Strömungskanal 12 sind wechselnd hintereinander entlang der Turbinenachse 3 Leitschaufelkränze 13 und Laufschaufelkränze 15 angeordnet, von denen jeweils nur ein Kranz beispielhaft gezeigt ist. Jeder Leitschaufelkranz 13 ist aus Gasturbinenleitschaufeln 17 aufgebaut. Jeder Laufschaufelkranz 13 ist aus Gasturbinenlaufschaufeln 19 aufgebaut. Durch die Brennkammer 7 und Gasturbinenteil 9 wird ein Heißgaskanal 8 definiert. Dieser ist durch eine Reihe von Bauteilen gebildet. Diese Bauteile-sind z. B. Elemente einer Brennkammerauskleidung (siehe Fig. 4), die Leitschaufelkränze 13 oder Laufschaufelkränze 15 bzw. die Leitschaufeln 17 oder Laufschaufeln 19. Zwischen solchen Bauteilen sind oftmals Spalte gebildet, die gegen einen Heißgaseintritt oder aber gegen eine Leckage von Kühlluft abgedichtet werden müssen. Dies wird anhand der weiteren Figuren näher erläutert.

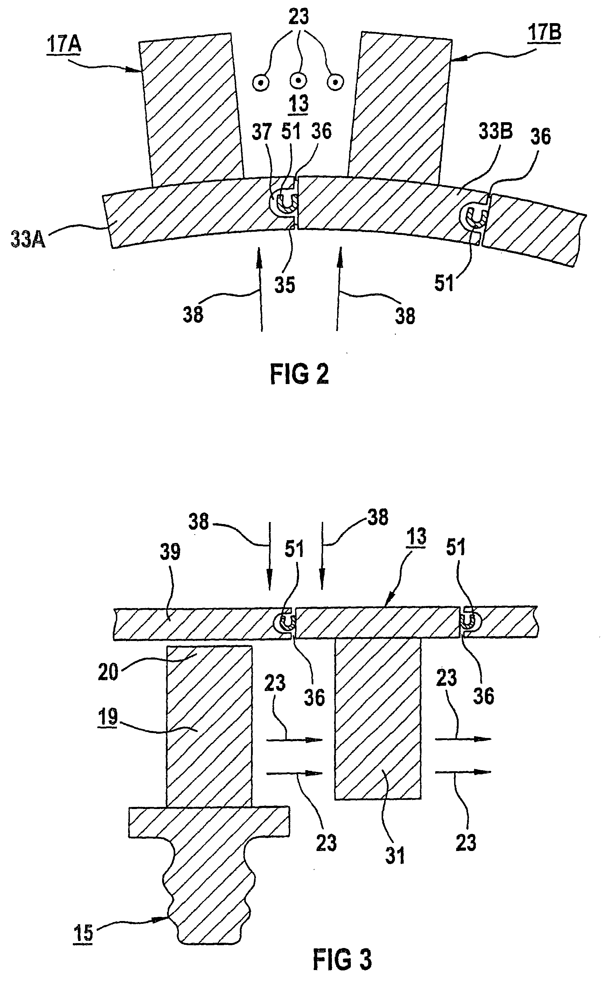

Fig. 2 zeigt in einem Längsschnitt einen Ausschnitt eines Leitschaufelkranzes 13. In diesen Leitschaufelkranz 13 sind eine erste Leitschaufel 17a und eine zweite Leitschaufel 17b zueinander unmittelbar benachbart. Die erste Leitschaufel 17a weist eine Plattform 33a auf. Die zweite Leitschaufel 17b weist eine zweite Plattform 33b auf. Zwischen den Plattformen 33a und 33b ist ein Spalt 36 gebildet. In der ersten Plattform 33a öffnet sich der Spalt zu einer entlang der ganzen Plattformseite verlaufenden Nut 37. Der Nut 37 liegt eine Abschlußkante 35 der zweiten Plattformseite 33b gegenüber. In der Nut 37 ist eine längliche, C-förmige Dichtung 51 eingelegt. Der Aufbau dieser Dichtung 51 wird später anhand von Fig. 5 näher erläutert.

Im Betrieb der Gasturbine wird zwischen den Leitschaufeln 17a, 17b heißes Gas geführt. Dadurch werden unter anderem die Plattformen 33a, 33b thermisch hoch belastet. Zur Reduzierung dieser thermischen Belastung werden die Plattformen rückseitig mittels Kühlluft 38 gekühlt. Diese Kühlluft 38 ist der Verdichterluft 21 entnommen. Eine Leckage dieser Kühlluft 38 durch den Spalt 36 muß möglichst gering gehalten werden, um Wirkungsgradeinbußen für die Gasturbine zu vermeiden. Eine Abdichtung des Spaltes 36 wird durch die Dichtung 51 erreicht. Diese weist eine temperaturabhängige Ausdehnungsfähigkeit auf. Oberhalb einer Arbeitstemperatur dehnt sich die Dichtung 51 soweit aus, daß sie sich in die Nut 37 und gegen die Abschlußseite 35 anpreßt. Dieser Anpreßdruck wird mit steigender Temperatur höher. Dadurch wird gerade bei hohen Temperaturen eine besonders gute Dichtwirkung erzielt. Die Arbeitstemperatur liegt vorzugsweise in einem Bereich zwischen 400 und 1000 °C.

In Fig. 3 ist ein Ausschnitt eines Laufschaufelkranzes 15 mit einem diesem benachbarten Leitschaufelkranz 13 in einem Längsschnitt gezeigt. Der Laufschaufelkranz 15 wird aus Laufschaufeln 19 gebildet. Die Laufschaufel 19 weist eine Laufschaufelspitze 20 auf. Der Laufschaufelspitze 20 liegt ein Führungsring 39 zur Führung der Laufschaufel 19 gegenüber. An den Führungsring 39 grenzt in axialer Richtung der Leitschaufelkranz 13. Zwischen dem Führungsring 39 und dem Leitschaufelkranz 13 ist ein Spalt 36 gebildet. Dieser wird analog zur Abdichtung des Spaltes der Fig. 2 mit Hilfe einer Dichtung 51 abgedichtet. Die Dichtung 51 ist in diesem Fall eine axiale Dichtung, da sie einen Spalt 36 in axialer Richtung überbrückt. Der Spalt 36 ist in diesem Fall ein um den gesamten Leitschaufelkranz 13 umlaufender Spalt. Die Montage einer konventionellen Dichtung für einen solchen Spalt gestaltet sich aufgrund der erheblichen Spaltlänge schwierig, da konventionelle Dichtungen passgenau gefertigt werden müssen, wodurch bei einem Einführen dieser Dichtung hohe Reibungskräfte entstehen. Durch diese Reibungskräfte kann es sogar zu einer Beschädigung einer solchen Dichtung kommen. Mit Hilfe der auf einer Wärmeausdehnung basierenden Dichtung 51 ergibt sich eine sehr viel einfachere Montage, da die Dichtung 51 im kalten Zustand genügend Spiel für ein Einlegen oder Einschieben in die Nut 37 läßt. Erst oberhalb der Arbeitstemperatur preßt sich die Dichtung 51 in die Nut 37 und dichtet den Spalt 36 ab. Die Form der Dichtung mit einer konvex gekrümmten Oberfläche führt zu einer hohen Flexibilität, die mit herkömmlichen bimetallischen Dichtungen nicht erreicht wird. Hierdurch kann eine relativ ausgedehnte Dichtung eingesetzt werden, die einfach montierbar ist und gegenüber gestückelten Dichtungen eine höhere Dichtwirkung erreicht.

Fig. 4 zeigt in einem Längsschnitt den Ausschnitt einer Brennkammerauskleidung 63 für die Brennkammer 7. Ein erstes Element 61a der Brennkammerauskleidung ist unmittelbar zu einem zweiten Element 61b der Brennkammerauskleidung 63 benachbart. Jedes der Elemente 61a, 61b ist jeweils mit einem Bolzen 67 an eine Brennkammerrückwand 65 montiert. Zwischen dem ersten Element 61a und dem zweiten Element 61b verbleibt ein Spalt 36, der analog zu den Ausbildungen der Fig. 2 und Fig. 3 mittels einer Dichtung 51 oberhalb einer Arbeitstemperatur abgedichtet wird. Dadurch tritt allenfalls eine sehr geringe Menge Kühlluft 38, die zur rückseitigen Kühlung der Elemente 61a und 61b verwendet wird, über den Spalt 36 in die Brennkammer 7 ein. Damit werden Kühlluftverluste begrenzt.

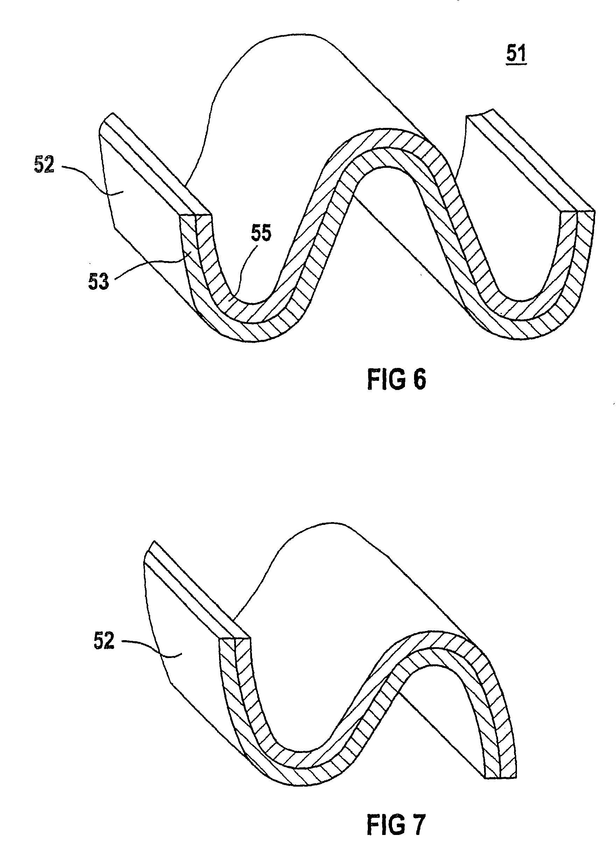

In den Figuren 5 bis 7 sind in perspektivischen Darstellungen unterschiedliche Formen für die Dichtung 51 dargestellt. Jede dieser Dichtungen 51 ist als ein Bimetallstreifen mit einer zumindest im Dichtzustand konvex gekrümmten Oberfläche 52 und mit einer Längserstreckungsrichtung 54 ausgebildet. Dabei ist ein erster Metallstreifen 53 auf einen zweiten Metallstreifen 55 aufgelötet. Die beiden Metallstreifen 53, 55 weisen unterschiedliche Wärmeausdehnungskoeffizienten auf. Die Dichtung 51 der Fig. 5 weist im Querschnitt eine C-Form auf. Bei einer Erwärmung dieser Dichtung 51 weiten sich die Schenkel dieser C-Form auf. Dadurch drücken sich diese Schenkel bei Anordnung in einer Nut 37 mit der Oberfläche 52 an die nutbegrenzenden Wände an. In Fig. 6 und Fig. 7 ist die Querschnittsform der Dichtung 51 W- bzw. S-förmig, also allgemein schlangenlinienförmig. Dadurch kann eine erhöhte Ausdehnung pro Grad Temperaturerhöhung und damit eine verstärkte Anpreßkraft erreicht werden.

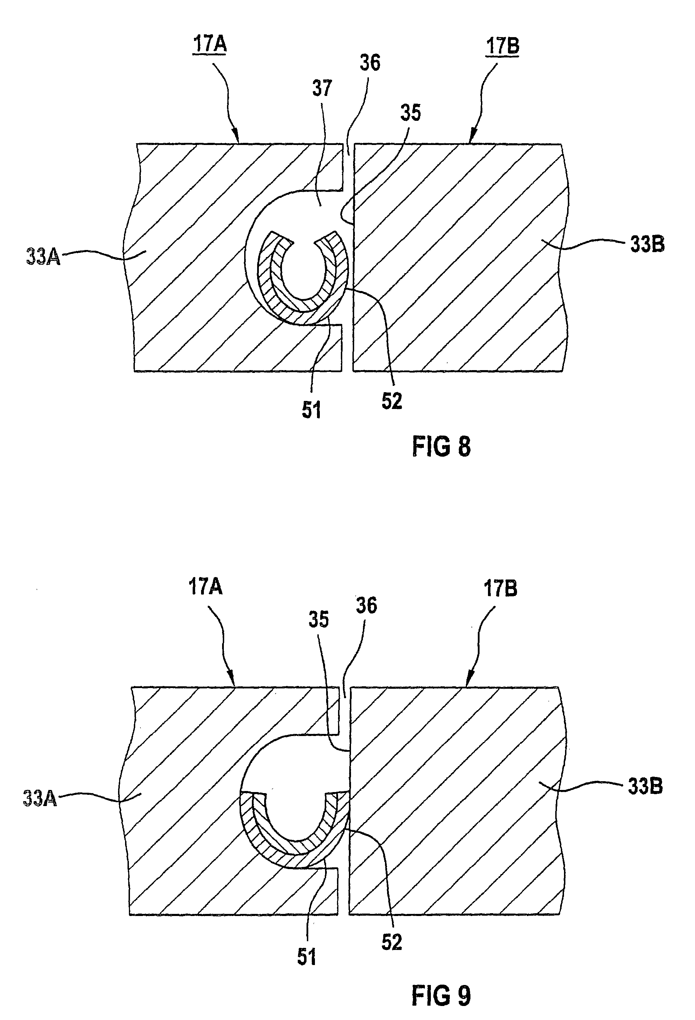

Die Figuren 8 und 9 zeigen eine C-förmige Dichtung 51, die in einem Spalt 36 zwischen zwei benachbarten Leitschaufeln 17a und 17b angeordnet ist. Fig. 8 zeigt dabei die Dichtung 51 unterhalb der Arbeitstemperatur und Fig. 9 die Dichtung 51 oberhalb der Arbeitstemperatur. Unterhalb der Arbeitstemperatur ist die Dichtung 51 soweit zusammengezogen, daß sie wiederstandsarm in die Nut 37 einlegbar oder einschiebbar ist. Oberhalb der Arbeitstemperatur 51 dehnt sich die Dichtung 51 soweit aus, daß sie sich mit der Oberfläche 52 in die Nut 37 der Plattform 33a und an die Abschlußseite 35 der Plattform 33b anpreßt. Damit wird der Spalt 36 abgedichtet.

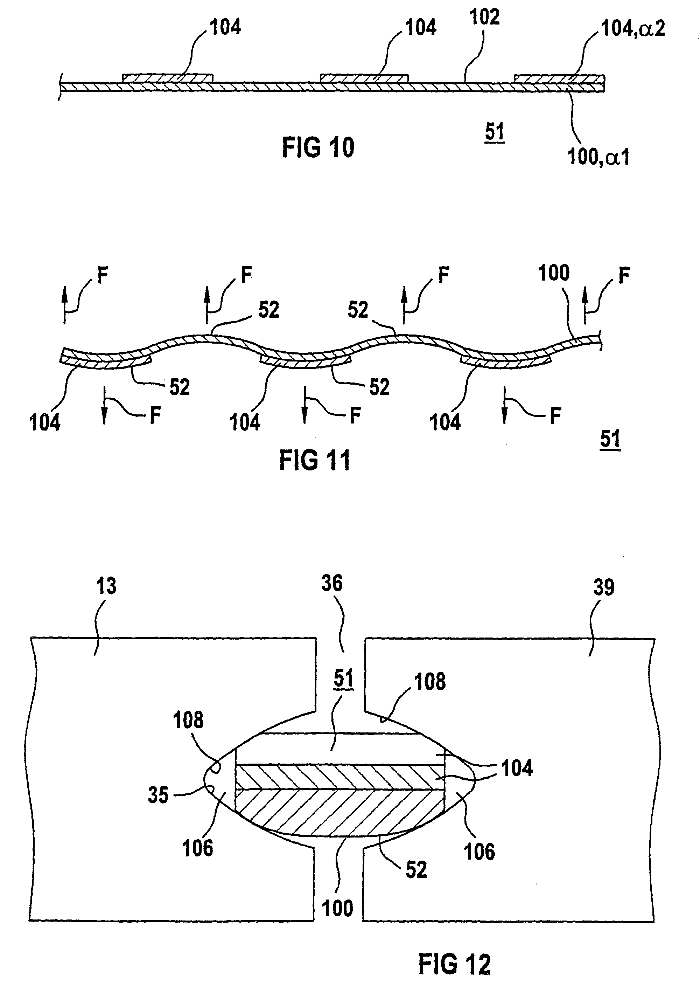

Figur 10 zeigt eine Dichtung 51, die insbesondere als eine axiale Dichtung 51 zwischen zwei benachbarten Schaufelkränzen, also zwischen zwei aufeinanderfolgenden Stufen, einer Turbine geeignet ist. Die Dichtung 51 weist einen Metallstreifen 100 auf, der aus einem Metall mit einem ersten Wärmeausdehnungskoeffizienten α1 besteht. Auf einer Oberseite 102 des Metallstreifens 100 sind beabstandet voneinander flache Metallstücke 104 aufgelötet. Die Metallstücke 104 bestehen aus einem Metall mit einem zweiten Wärmeausdehnungskoeffizienten α2, der vom ersten Wärmeausdehnungskoeffizienten α1 verschieden ist. Somit ist die Dichtung 51 abschnittsweise als ein Bimetall ausgebildet. Bei einer Erwärmung verbiegt sich die Dichtung 51 wellenartig, so dass sich Abschnitte mit konvex gekrümmten Oberflächen 52 ergeben. Dies ist in Figur 11 dargestellt. Durch die wellenartige Verbiegung der Dichtung 51 übt die Dichtung 51 an den Wellenmaxima eine Anpreßkraft F auf angrenzende, hier nicht näher dargestellte, Flächen aus. Dadurch wird mit steigender Temperatur eine erhöhte Dichtwirkung erzielt.

Figur 12 zeigt in einem Längsschnitt die Dichtung 51 der Figur 10 in eingebautem Zustand zwischen einem Leitschaufelkranz 13 und einem Führungsring 39 einer Laufschaufel. Zwischen der Leitschaufel 13 und dem Führungsring 39 verbleibt ein Spalt 36. Angrenzend an den Spalt 36 und parallel zu dem Spalt 36 sind sowohl im Leitschaufelkranz 13 als auch im Führungsring 39 Nuten 106 eingebracht. Die Nuten 106 weisen eine Nutoberfläche 108 auf. Die Nutoberfläche 108 ist gerundet geformt. In den Nuten 106 ist die Dichtung 51 eingelegt, die den Spalt 36 abdichtet. Der Metallstreifen 100 der Dichtung 51 weist eine abgerundete Form auf. Bei einer Erwärmung der Dichtung 51 preßt sich diese mit ihrer Oberfläche 52 durch die wellenartige Ausbildung (siehe Figur 11) an die Nutoberfläche 108 an. Dabei ergibt sich durch die gerundete Nutoberfläche 108 und durch den gerundeten Metallstreifen 100 eine große Auflagefläche für die Dichtung 51. Dies führt zu einer weiter verbesserten Dichtwirkung.

## Patentansprüche

1. Dichtung (51) mit einer temperaturabhängigen Ausdehnungsfähigkeit, durch welche Ausdehnungsfähigkeit oberhalb einer Arbeitstemperatur ein Spalt (36) abdichtbar ist, wobei die Dichtung (51) als bimetallischer Körper, insbesondere als Bimetallstreifen, ausgebildet ist **dadurch gekennzeichnet, daß** die Dichtung (51) einen Metallstreifen (100) aus einem ersten Metall mit einem ersten Wärmeausdehnungskoeffizienten und mit einer Oberseite (102) aufweist, auf welche Oberseite (102) voneinander beabstandet Metallstücke (104) aus einem zweiten Metall mit einem vom ersten Metall verschiedenen zweiten Wärmeausdehnungskoeffizienten aufgebracht sind..

2. Dichtung (51) nach Anspruch 1, die zur Abdichtung eines Spaltes (36) zwischen Bauteilen (17, 13, 39, 61) eines Heißgaskanals (8) einer Turbine (1) ausgelegt ist.

3. Dichtung (51) nach Anspruch 2, die zur Abdichtung eines Spaltes (36) zwischen unmittelbar benachbarten Schaufeln (17) eines Schaufelkranzes (13) der Turbine (1) ausgelegt ist.

4. Dichtung (51) nach Anspruch 2, die zur Abdichtung eines Spaltes (36) zwischen benachbarten Schaufelkränzen (13, 15) der Turbine (1) ausgelegt ist.

5. Dichtung (51) nach Anspruch 2, die zur Abdichtung eines Spaltes (36) zwischen einem Leitschaufelkranz (13) und einem Führungsring (39) für einen Laufschaufelkranz (15) ausgelegt ist.

6. Dichtung (51) nach einem der vorhergehenden Ansprüche, die entlang einer Längserstreckungsrichtung (54) gerichtet ist und eine im Querschnitt etwa C-förmige Form aufweist.

7. Dichtung (51) nach einem der vorhergehenden Ansprüche, die entlang einer Längserstreckungsrichtung (54) gerichtet ist und eine im Querschnitt etwa W-förmige oder S-förmige Form aufweist.

8. Turbine (1) mit einem aus einer Mehrzahl von Bauteilen (17, 13, 39, 61) gebildeten Heißgasbereich (8) und einem Spalt (36) zwischen zweien dieser Bauteile (17, 13, 39, 61), **dadurch gekennzeichnet, daß** der Spalt (36) durch eine temperaturabhängige Ausdehnungsfähigkeit einer Dichtung (51) gemäß einem der vorhergehenden Ansprüche oberhalb einer Arbeitstemperatur abdichtbar ist.

9. Turbine (1) nach Anspruch 8, **dadurch gekennzeichnet, daß** die zwei Bauteile (17) zueinander unmittelbar benachbarte Schaufeln eines Schaufelkranzes (13) sind.

10. Turbine (1) nach Anspruch 8, **dadurch gekennzeichnet, daß** die zwei Bauteile () zueinander benachbarte Schaufelkränze (13, 15) sind.

11. Turbine (1) nach Anspruch 8, **dadurch gekennzeichnet, daß** die zwei Bauteile (13, 39) einerseits ein Leitschaufelkranz (13) und andererseits ein Führungsring (39) für einen Laufschaufelkranz (15) sind.

12. Turbine (1) nach Anspruch 10, **dadurch gekennzeichnet, daß** die Nut (106) eine Nutoberfläche (108) mit einer Form so aufweist, daß sich die Dichtung (51) bei einer Ausdehnung an die Nutoberfläche (108) anschmiegt.

13. Turbine (1) nach Anspruch 10, **dadurch gekennzeichnet, daß** die Dichtung (51) ein bimetallischer Körper mit einer im Querschnitt etwa C-förmigen, oder W-förmigen oder S-förmigen Form ist.

14. Turbine (1) nach Anspruch 10, **gekennzeichnet durch** eine Ausführung als Gasturbine.

15. Turbine (1) nach Anspruch 14, **gekennzeichnet durch** eine Ausführung als stationäre Gasturbine, insbesondere mit einer Leistung größer als 10 Megawatt.

16. Turbine (1) nach Anspruch 10, **dadurch gekennzeichnet, daß** die zwei Bauteile (61) Elemente einer Brennkammerauskleidung (63) sind.

## Claims

1. Seal (51) with a temperature-dependent expandability, by means of which expandability a gap (36) can be sealed off above a working temperature, the seal(51) being designed as a bimetallic body, in particular as a bimetallic strip, **characterized in that** the seal (51) has a metal stip (100) consisting of a first metal with a first coefficient of thermal expansion and with a topside (102), to which topside (102) are applied, spaced from one another, metal pieces (104) consisting of a second metal with a second coefficient of thermal expansion different from that of the first metal.

2. Seal (51) according to Claim 1, which is designed for sealing off a gap (36) between components (17, 13, 39, 61) of a hot-gas duct (8) of a turbine (1).

3. Seal (51) according to Claim 2, which is designed for sealing off a gap (36) between directly adjacent blades (17) of a blade ring (13) of the turbine (1).

4. Seal (51) according to Claim 2, which is designed for sealing off a gap (36) between adjacent blades rings (13, 15) of the turbine (1).

5. The seal (51) according to Claim 2, which is designed for sealing off a gap (36) between a guide blade ring (13) and a guide ring (39) for a moving blade ring (15).

6. Seal (51) according to one of the preceding claims, which is directed in a direction of longitudinal extent (54) and is approximately C-shaped in cross section.

7. Seal (51) as claimed in one of the preceding claims, which is directed in a direction of longitudinal extent (54) and is approximately W-shaped or S-shaped in cross section.

8. Turbine (1) with a hot-gas region (8) formed from a plurality of components (17, 13, 39, 61) and with a gap (36) between two of these components (17, 13, 39, 61), **characterized in that** the gap (36) can be sealed off above a working temperature as a result of a temperature-dependent expandability of a seal (51) according to one of the preceding claims.

9. Turbine (1) according to Claim 8, **characterized in that** the two components (17) are blades of a blade ring (13) which are directly adjacent to one another.

10. Turbine (1) according to Claim 8, **characterized in that** the two components are blade rings (13, 15) adjacent to one another.

11. Turbine (1) according to Claim 8, **characterized in that** the two components (13, 39) are, on the one hand, a guide blade ring (13) and, on the other hand, a guide ring (39) for a moving blade ring (15).

12. Turbine (1) according to Claim 10, **characterized in that** the groove (106) has a groove surface (108) with a shape such that, under expansion, the seal (51) fits snugly against the groove surface (108).

13. Turbine (1) according to Claim 10, **characterized in that** the seal (51) is a bimetallic body which is approximately C-shaped or W-shaped or S-shaped in cross section.

14. Turbine (1) according to Claim 10, **characterized by** a design as a gas turbine.

15. Turbine (1) according to Claim 14, **characterized by** a design as a stationary gas turbine, in particular with a power output greater than 10 megawatts.

16. Turbine (1) according to Claim 10, **characterized in that** the two components (61) are elements of a combustion chamber lining (63).

## Revendications

1. Garniture (51) d'étanchéité ayant une aptitude à se dilater en fonction de la température, aptitude à se dilater par laquelle un intervalle (36) peut être rendu étanche au-dessus d'une température de travail, la garniture (51) d'étanchéité étant constituée sous la forme d'une pièce bimétallique, notamment d'une bande de bilame, **caractérisée en ce que** la garniture (51) d'étanchéité comporte une bande (100) métallique constituée d'un premier métal ayant un premier coefficient de dilatation thermique et ayant une face (102) supérieure, face (102) supérieure sur laquelle sont déposées à distance les unes des autres des pièces (104) métalliques en un deuxième métal ayant un deuxième coefficient de dilatation thermique différent de celui du premier métal.

2. Garniture (51) d'étanchéité suivant la revendication 1, qui est conçue pour rendre étanche un intervalle (36) entre des éléments (17, 13, 39, 61) constitutifs d'un canal (8) pour du gaz chaud d'une turbine (1).

3. Garniture (51) d'étanchéité suivant la revendication 1, qui est conçue pour rendre étanche un intervalle (36) entre des aubes (17) directement voisines d'une couronne (13) d'aubes de la turbine (1).

4. Garniture (51) d'étanchéité suivant la revendication 2, qui est conçue pour rendre étanche un intervalle (36) entre des couronnes (13, 15) voisines d'aubes de la turbine (1).

5. Garniture (51) d'étanchéité suivant la revendication 2, qui est conçue pour rendre étanche un intervalle (36) entre une couronne (13) d'aubes directrices et un anneau (39) de guidage pour une couronne (15) d'aubes mobiles.

6. Garniture (51) d'étanchéité suivant l'une des revendications précédentes, qui est dirigée le long d'une direction (54) d'étendue longitudinale et qui a en section transversale une forme à peu près en C.

7. Garniture (51) d'étanchéité suivant l'une des revendications précédentes, qui est dirigée le long d'une direction (54) d'étendue longitudinale et qui a en section transversale une forme à peu près en oméga ou en S.

8. Turbine (1) ayant une partie (8) pour du gaz chaud formée d'une multiplicité d'éléments (17, 13, 39, 61) constitutifs et un intervalle (36) entre deux de ces éléments (17, 13, 39, 61) constitutifs, **caractérisée en ce que** l'intervalle (36) peut être rendu étanche au-dessus d'une température de travail par une garniture (51) susceptible de se dilater en fonction de la température suivant l'une des revendications précédentes.

9. Turbine (1) suivant la revendication 8, **caractérisée en ce que** les deux éléments (17) constitutifs sont des aubes immédiatement voisines l'une de l'autre d'une couronne (13) d'aubes.

10. Turbine (1) suivant la revendication 8, **caractérisée en ce que** les deux éléments constitutifs sont des couronnes (13, 15) voisines l'une de l'autre d'aubes.

11. Turbine (1) suivant la revendication 8, **caractérisée en ce que** les deux éléments (13, 39) constitutifs sont, d'une part, une couronne (13) d'aubes directrices et, d'autre part, un anneau (39) de guidage d'une couronne (15) d'aubes mobiles.

12. Turbine (1) suivant la revendication 10, **caractérisée en ce que** la gorge (106) d'une surface (108) à gorge a une forme telle que la garniture (51) d'étanchéité s'applique lors d'une dilatation à la surface (108) à gorge.

13. Turbine (1) suivant la revendication 10, **caractérisée en ce que** la garniture (51) d'étanchéité est une pièce bimétallique ayant en section transversale une forme à peu près en C ou en W ou en S.

14. Turbine (1) suivant la revendication 10, **caractérisée par** une réalisation sous la forme d'une turbine à gaz.

15. Turbine (1) suivant la revendication 14 **caractérisée par** une réalisation sous la forme d'une turbine à gaz fixe d'une puissance notamment supérieure à 10 mégawatts.

16. Turbine (1) suivant la revendication 10, **caractérisée en ce que** les deux éléments (61) consécutifs sont des éléments d'un revêtement (63) de chambre de combustion.
